(19) **Europäisches Patentamt European Patent Office Office européen des brevets**

(11) **EP 4 254 359 B1**

(12) **FASCICULE DE BREVET EUROPEEN**

(45) Date de publication et mention de la délivrance du brevet:
**16.07.2025 Bulletin 2025/29**

(21) Numéro de dépôt: **23161748.1**

(22) Date de dépôt: **14.03.2023**

(51) Classification Internationale des Brevets (IPC):
**G06V 10/147** (2022.01)   **G06V 20/52** (2022.01)
**G06V 40/10** (2022.01)   **G06T 5/80** (2024.01)
**G06T 7/70** (2017.01)

(52) Classification Coopérative des Brevets (CPC):
**G06V 20/52; G06T 5/80; G06T 7/70; G06V 10/147; G06V 40/10;** G06T 2207/10048; G06T 2207/30196; G06T 2207/30232

(54) **PROCÉDÉ D'OBTENTION DE LA POSITION D'UNE PERSONNE DANS UN ESPACE, IMAGEUR THERMIQUE ET DÉTECTEUR DOMOTIQUE**

VERFAHREN ZUR POSITIONSBESTIMMUNG EINER PERSON IN EINEM RAUM, WÄRMEBILDGERÄT UND HEIMDETEKTOR

METHOD FOR OBTAINING THE POSITION OF A PERSON IN A SPACE, THERMAL IMAGER AND HOME-AUTOMATION SENSOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.03.2022 FR 2202895**

(43) Date de publication de la demande:
**04.10.2023 Bulletin 2023/40**

(73) Titulaire: **SCHNEIDER ELECTRIC INDUSTRIES SAS**
**92500 Rueil-Malmaison (FR)**

(72) Inventeurs:
• **PERSEGOL, Dominique**
  **38000 Grenoble (FR)**
• **PHARAM, Hector**
  **38000 Grenoble (FR)**

(74) Mandataire: **Schneider Electric Service Propriété Industrielle**
**35, rue Joseph Monier**
**92500 Rueil-Malmaison (FR)**

(56) Documents cités:
• **MANDEL CHRISTIAN ET AL: "People Tracking in Ambient Assisted Living Environments Using Low-Cost Thermal Image Cameras", 21 May 2016, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 14 - 26, ISBN: 978-3-540-74549-5, XP047341552**
• **SWAMIDOSS ISSAC NIWAS ET AL: "Systematic approach for thermal imaging camera calibration for machine vision applications", OPTIK, WISSENSCHAFTLICHE VERLAG GMBH, DE, vol. 247, 24 September 2021 (2021-09-24), XP086832270, ISSN: 0030-4026, [retrieved on 20210924], DOI: 10.1016/J.IJLEO.2021.168039**

**Description**

**Domaine technique**

La présente divulgation concerne un procédé d'obtention de la position d'une personne dans un espace d'un bâtiment. La présente divulgation concerne également un imageur thermique et un détecteur domotique configurés pour mettre en oeuvre le procédé d'obtention de la position de la personne.

**Technique antérieure**

Dans la gestion des bâtiments, il est connu d'employer des détecteurs domotiques permettant de détecter la présence des personnes dans un ou plusieurs espace(s), intérieur(s) ou extérieur(s), du bâtiment. L'espace est par exemple une pièce ou une zone d'une pièce.

La détection de personnes permet d'ajuster la consommation d'énergie dans l'espace correspondant, par exemple pour l'éclairage, le chauffage, la ventilation ou la climatisation de cet espace. La détection de personnes permet également de mettre en oeuvre des fonctions de vidéosurveillance dans l'espace. Elle permet également de comprendre l'utilisation réelle des espaces d'un bâtiment par exemple le taux réel d'utilisation des salles de réunion, le nombre de postes de travail libres ou occupées dans des bureaux partagés, etc. La détection de personnes permet aussi de déterminer où il est le plus approprié d'installer des dispositifs de protection contre le feu dans le bâtiment, entre autres.

La détection de personnes est réalisée grâce au montage dans l'espace concerné d'un imageur thermique capable de capter le rayonnement infrarouge émis par les corps présents dans l'espace et de créer des images thermiques de l'espace à partir de ce rayonnement capté. Une image thermique -peut être représentée soit par des niveaux de gris soit par des zones de couleurs différentes en fonction de la quantité d'énergie infrarouge émise par chaque corps de l'espace. Cette quantité varie en fonction de la température de chaque corps. Aussi, il est possible de distinguer sur l'image thermique les personnes, dont la température se situe dans une plage de températures d'environ 20°C à 40°C en fonction de la tenue vestimentaire des personnes, des autres corps présents dans l'espace, et dont la température s'écarte de la plage de températures des personnes.

Dans certains cas, l'imageur thermique utilise une lentille grand angle, par exemple avec un angle de champ supérieur ou égal à 120°. Une telle lentille a donc un champ de vision large, ce qui permet de capturer une surface plus grande de l'espace qu'une lentille classique. Toutefois, des distorsions visuelles apparaissent dans l'image obtenue, laquelle a en particulier une apparence convexe au lieu de plane. Aussi, ces imageurs thermiques connus ne permettent pas de connaitre avec précision la position de personnes dans l'espace surveillé. La gestion optimale du bâtiment devient ainsi difficile.

Mandel C. et al: "People Tracking in Ambient Assisted Living Environments Using Low-Cost Thermal Image Cameras". In: Chang, C., Chiari, L., Cao, Y., Jin, H., Mokhtari, M., Aloulou, H. (eds) Inclusive Smart Cities and Digital Health. ICOST 2016. Lecture Notes in Computer Science, vol 9677. Springer, Cham. DOI:10.1007/978-3-319-39601-9_2, décrit l'utilisation d'un imageur thermique pour le suivi de personnes dans les environnements d'aide à la vie autonome. Une soustraction de fond et une segmentation sont appliquées sur des images thermiques de basse résolution. Ensuite, le suivi de personnes est effectué à l'aide d'un filtrage particulaire de type Monte-Carlo.

Swamidoss I. N. et al: "Systematic approach for thermal imaging camera calibration for machine vision applications", Optik, , vol. 247, 29 septembre 2021, ISSN: 0030-4026, DOI: 10.1016/ J.IJLEO.2021.168039, décrit une technique de calibrage d'un imageur thermique reposant sur la conception d'une carte d'étalonnage destinée à étalonner les caméras thermiques infrarouges de moyenne et longue longeur d'onde (MWIR et LWIR).

**Résumé**

La présente divulgation vient améliorer la situation.

A cet effet, il est proposé un procédé d'obtention de la position d'une personne dans un espace d'un bâtiment par un imageur thermique situé en hauteur dans le dit espace et comprenant une lentille grand angle, le procédé comprenant les étapes de :

a) acquisition par l'imageur thermique, à travers sa lentille grand angle, d'une image thermique déformée d'une scène dans l'espace comprenant la personne, l'image thermique étant déformée optiquement par la lentille grand angle, et l'image thermique déformée comprenant une zone chaude ;
b) extraction d'une région d'intérêt correspondant à la personne de l'image thermique déformée à l'aide d'un algorithme de détection de zones chaudes ;
c) détermination de la position de la région d'intérêt dans l'image thermique déformée en identifiant les coordonnées polaires distance r et angle θ du centre de la région d'intérêt dans un repère polaire dont l'origine se situe au centre de l'image thermique déformée ;
d) obtention de la position réelle de la personne dans l'espace par application d'une fonction de correction grand angle à la distance r pour compenser la déformation de l'image thermique due à la lentille grand angle.

Grâce à l'application de la fonction de correction grand angle à la distance r il est possible d'obtenir la position réelle de chaque personne dans la scène de l'espace surveillé du bâtiment. Aussi, la gestion du bâtiment, par exemple en termes de connaissance réelle de l'usage du bâtiment, des usages et du taux d'occupation de salles de réunion, de consommation d'énergie, de vidéosurveillance ou d'installation de dispositifs contre le feu, est plus simple et exacte. L'accès à la position réelle des personnes permet aussi de faire un suivi plus précis de l'occupation des postes de travail dans les espaces partagés. Il permet également d'éviter les surcomptages dans le cas d'imageurs thermiques adjacents ayant un recouvrement de champ. Il permet enfin d'avoir un suivi plus précis de la gestion de files d'attente.

Par ailleurs, l'application de la fonction de correction uniquement à la distance r du centre de la région d'intérêt représentatif de la position de la personne, et non à toute l'image thermique déformée, permet d'obtenir la position d'une personne avec un temps et une charge de calcul faibles. Ainsi, le procédé selon la présente divulgation peut être mis en œuvre même par un imageur thermique à faible consommation.

Les caractéristiques exposées dans les paragraphes suivants peuvent, optionnellement, être mises en œuvre, indépendamment les unes des autres ou en combinaison les unes avec les autres :

-   la fonction de correction grand angle appliquée à l'étape d) comprend un facteur de normalisation Fn de la coordonnée distance r du centre de la région d'intérêt et un facteur métrique Fm tenant compte d'un angle de champ de la lentille grand angle et d'une hauteur d'installation de l'imageur thermique dans l'espace du bâtiment par rapport à un sol dudit espace, la fonction de correction grand angle comprenant notamment le produit du facteur de normalisation Fn et du facteur métrique Fm ;
-   le facteur de normalisation est défini comme :

$$Fn = \frac{r}{\beta(1 - \alpha(r^2))}$$

où β est un coefficient d'échelle et α est un coefficient de distorsion, le coefficient d'échelle β et le coefficient de distorsion α ayant des valeurs prédéterminées ;
-   le facteur métrique est défini comme :

$$Fm = (h - h_0)\tan\left(\frac{\gamma}{2}\right)$$

où h est la hauteur de l'imageur thermique par rapport au sol de l'espace, $h_0$ est une valeur représentative de la hauteur du centre de la région d'intérêt par rapport au sol et γ est l'angle de champ de la lentille grand angle ;
-   la fonction de correction grand angle appliquée à l'étape d) comprend en outre un facteur, de préférence linéaire, de correction angulaire Fa :
-   la fonction de correction grand angle comprend le produit du facteur de normalisation Fn fois le facteur métrique Fm fois le facteur de correction angulaire Fa ;
-   une valeur du facteur de correction angulaire Fa est fonction d'une valeur de la coordonnée angle θ, la valeur du facteur de correction angulaire Fa suivant une distribution en forme de dents de scie dont une valeur maximale est associée aux valeurs 45°, 135°, 225° et 315° de la coordonnée angle θ.

Selon un autre aspect, il est proposé un imageur thermique comprenant une lentille grand angle, l'imageur thermique étant configuré pour mettre en œuvre le procédé décrit ci-avant.

Les caractéristiques exposées dans les paragraphes suivants peuvent, optionnellement, être mises en œuvre, indépendamment les unes des autres ou en combinaison les unes avec les autres :

-   la lentille est une lentille hypergone ;
-   l'imageur comprend un capteur imagerie infrarouge à ondes longues pour l'acquisition des images thermiques.

Selon un autre aspect, il est proposé un détecteur domotique comprenant un imageur thermique tel que décrit ci-avant.

**Brève description des dessins**

D'autres caractéristiques, détails et avantages apparaîtront à la lecture de la description détaillée ci-après, et à l'analyse des dessins annexés, sur lesquels :

**Fig. 1**

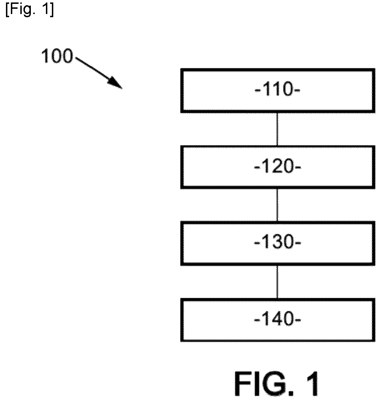

[Fig. 1] montre un logigramme d'un procédé d'obtention de la position d'une personne dans un espace d'un bâtiment selon un exemple de réalisation de l'invention.

**Fig. 2**

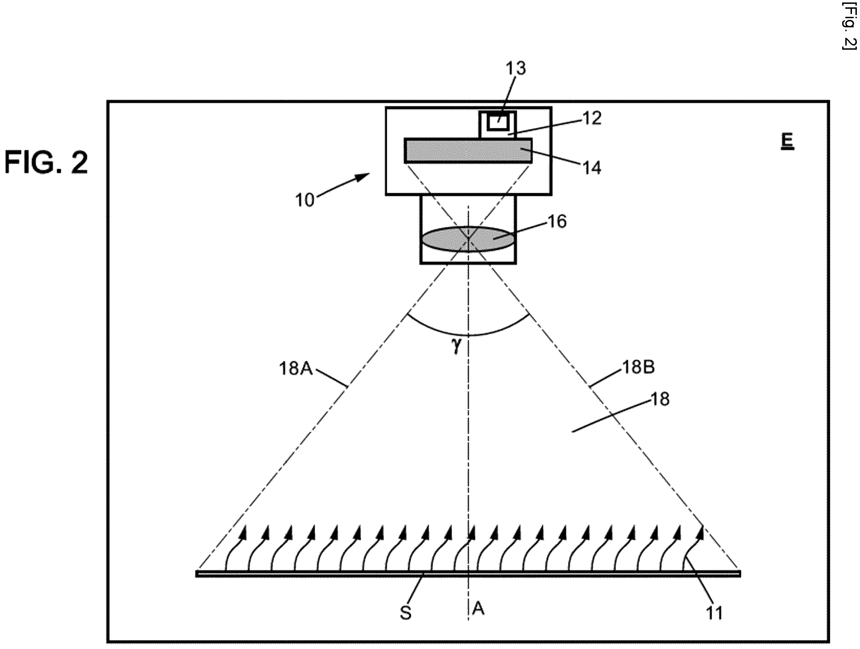

[Fig. 2] montre une vue schématique d'un exemple de réalisation d'un imageur thermique installé dans l'espace d'un bâtiment pour la mise en oeuvre du procédé de la figure 1.

**Fig. 3**

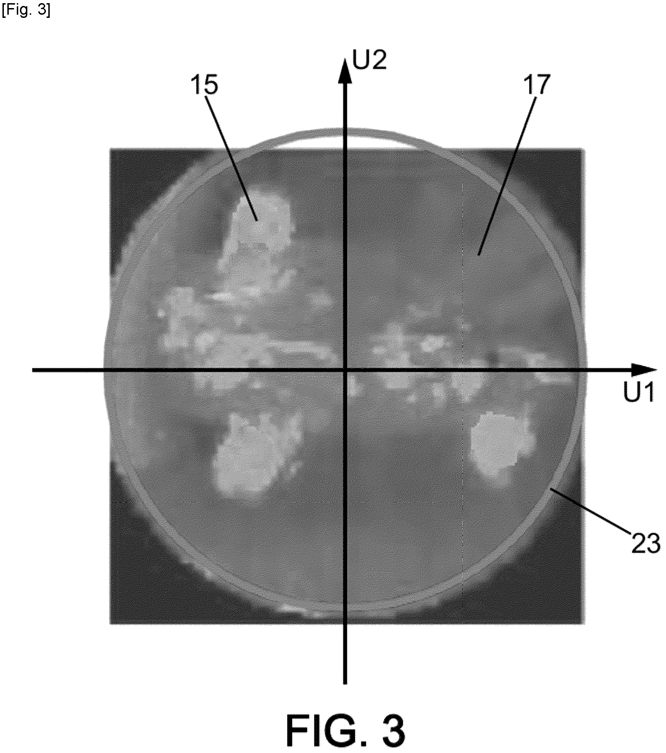

[Fig. 3] montre un exemple d'image thermique obtenue à partir de l'imageur thermique de la figure 2 lors de la mise en oeuvre d'une étape du procédé de la figure 1.

**Fig. 4A**

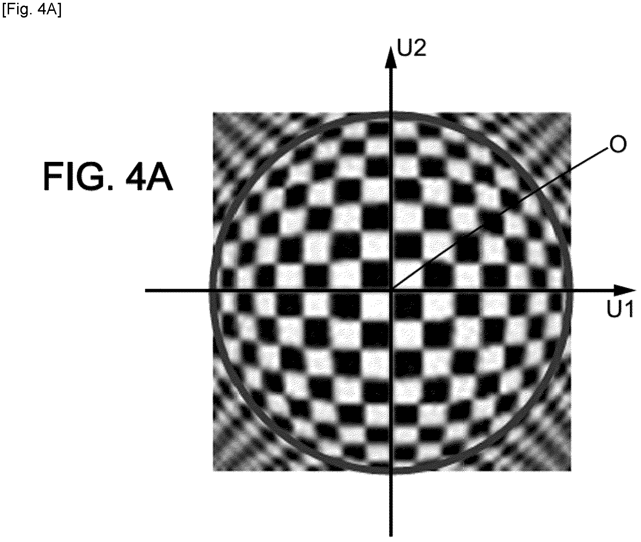

[Fig. 4A] montre une déformation typique d'une image de type damier obtenue par un imageur muni d'une lentille grand angle.

**Fig. 4B**

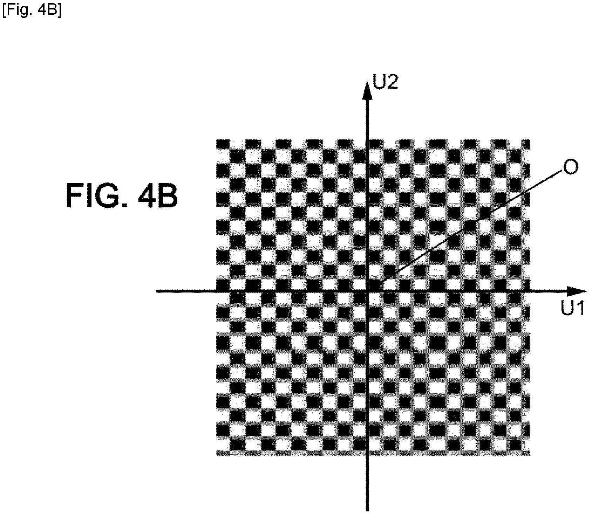

[Fig. 4B] montre une répartition corrigée de l'image de type damier de la figure 4A.

**Fig. 5**

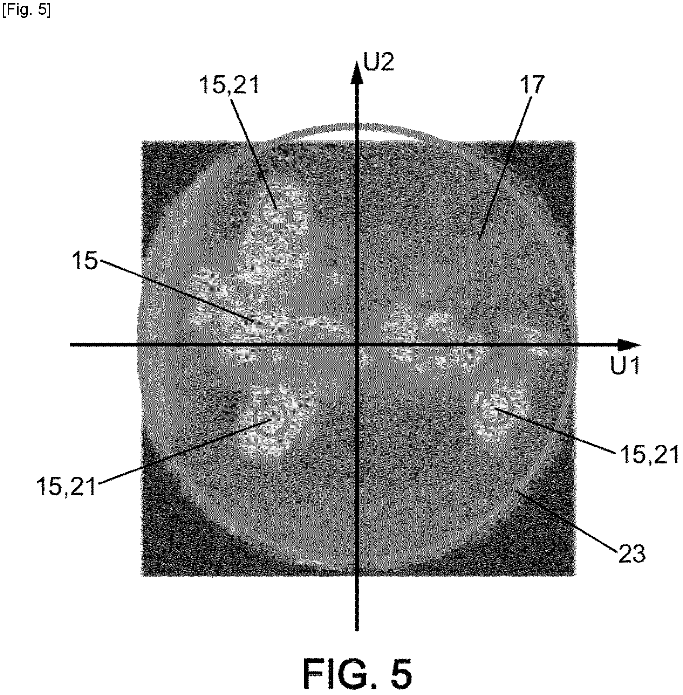

[Fig. 5] montre l'image thermique de la figure 3 après application d'une étape ultérieure du procédé de la figure 1.

**Fig. 6**

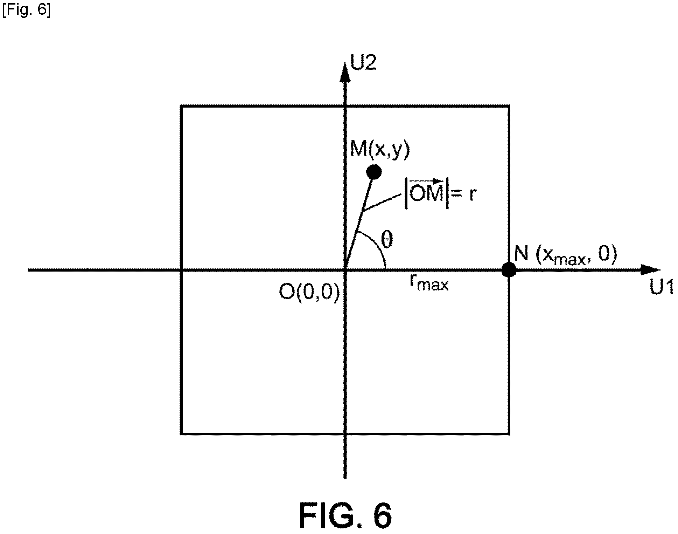

[Fig. 6] est une représentation schématique montrant le centre d'une région d'intérêt d'une image thermique sur un repère polaire.

**Fig. 7**

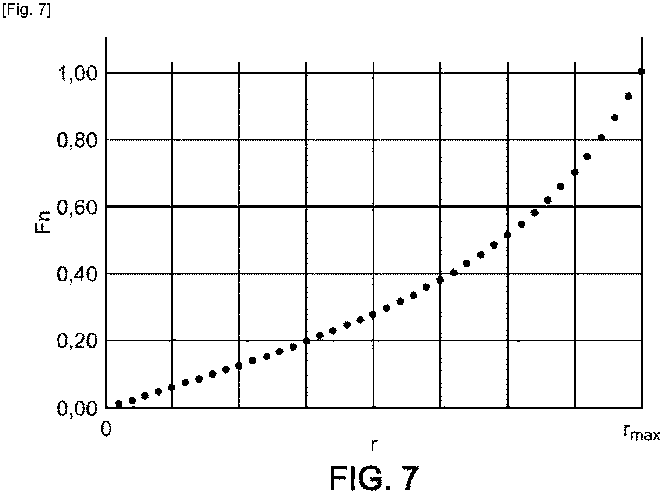

[Fig. 7] est un exemple de graphe montrant les valeurs d'un facteur de normalisation appliqué lors d'une étape du procédé de la figure 1 en fonction d'une distance en pixels d'un centre d'une région d'intérêt de l'image thermique de la figure 3 au centre de cette image.

**Fig. 8**

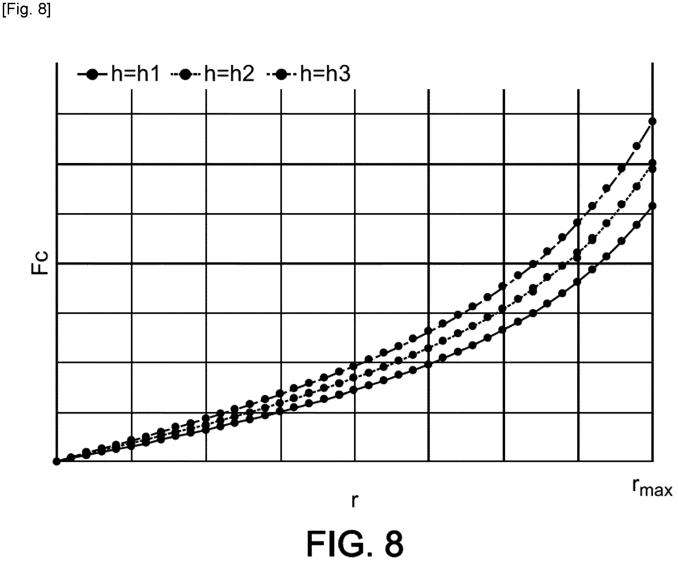

[Fig. 8] est un exemple de graphe montrant les valeurs de la coordonnée radiale de la position d'une personne détectée dans l'espace du bâtiment en fonction de la distance en pixels du centre de la région d'intérêt de l'image thermique de la figure 3 au centre de cette image, ainsi qu'en fonction de diverses hauteurs d'installation de l'imageur thermique de la figure 2.

**Fig. 9**

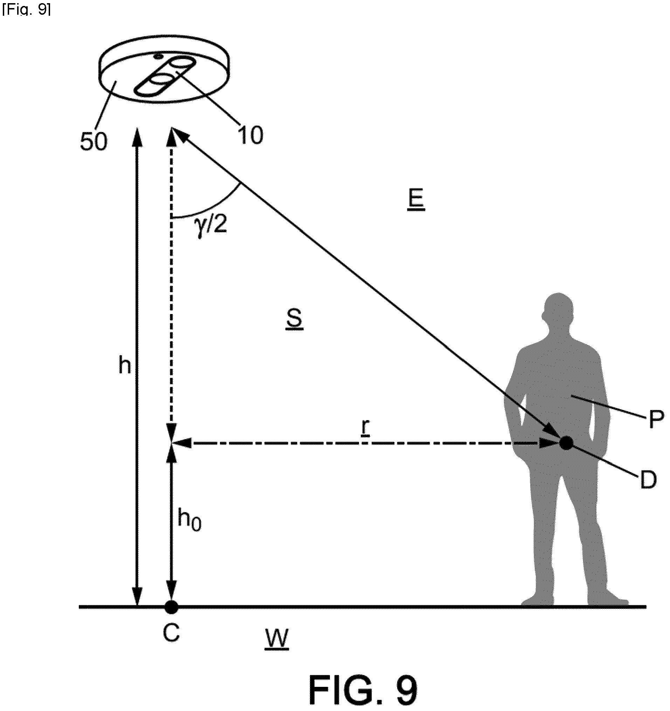

[Fig. 9] montre une représentation schématique de l'installation d'un détecteur domotique comprenant l'imageur thermique de la figure 2 dans l'espace E d'un bâtiment.

**Fig. 10A**

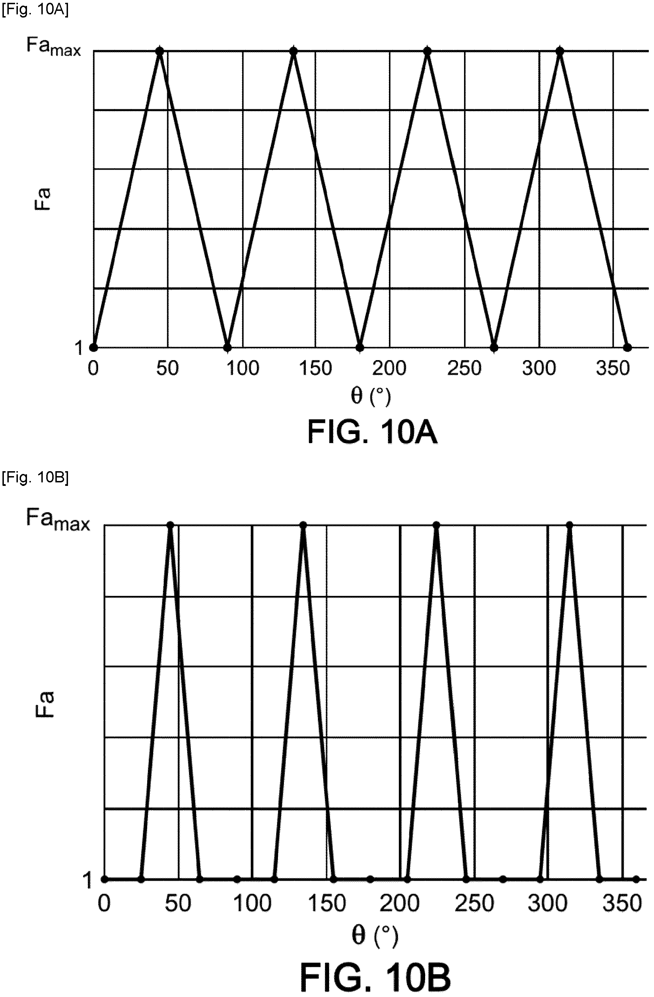

[Fig. 10A] montre un exemple de courbe d'évolution d'un facteur de correction angulaire utilisé lors de l'une des étapes du procédé de la figure 1.

**Fig. 10B**
[Fig. 10B] montre un autre exemple de courbe d'évolution du facteur de correction angulaire utilisé lors de l'une des étapes du procédé de la figure 1.

**Fig. 11**

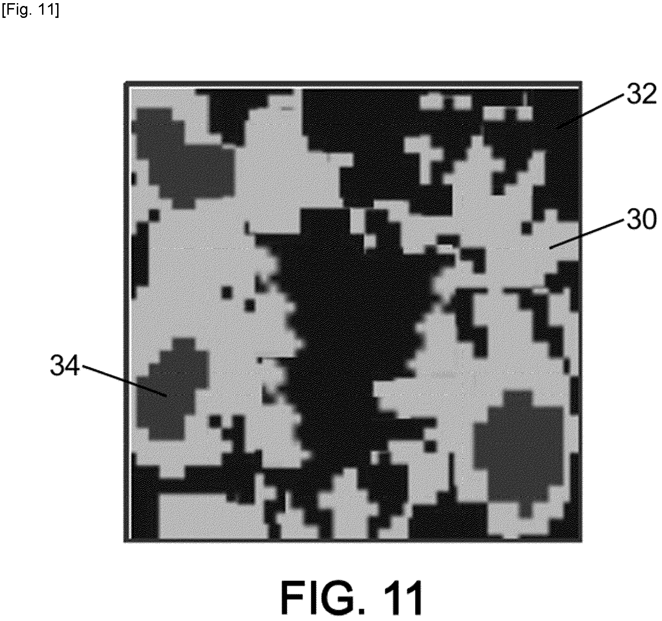

[Fig. 11] montre un exemple de cartographie de densité obtenue sur la base du procédé de la figure 1.

**Fig. 12**

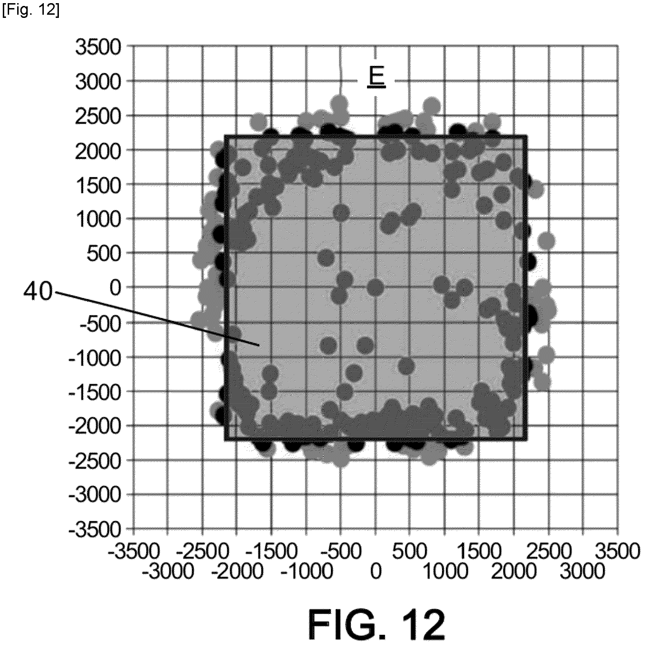

[Fig. 12] montre un exemple de filtre appliqué pour trier les positions de personnes obtenues à partir du procédé de la figure 1.

## Description des modes de réalisation

La figure 1 représente un logigramme d'un procédé 100 selon l'invention d'obtention de la position d'une ou plusieurs personne(s) dans un espace d'un bâtiment. Le procédé comprend les étapes 110 à 140 qui seront décrites par la suite.

Par « bâtiment », on entend toute construction immobilière, telle qu'un immeuble, un appartement, un bureau, etc. L'espace du bâtiment peut être une partie intérieure du bâtiment, par exemple une pièce ou une zone d'une pièce, ou une partie extérieure du bâtiment, par exemple un balcon, une cour ou un jardin.

Comme il va être détaillé ultérieurement, dans le présent texte, la « position d'une personne » s'entend des coordonnées du point de l'espace où se trouve la personne par rapport à l'origine d'un référentiel prédéterminé pour l'espace du bâtiment correspondant. Ces coordonnées peuvent être cartésiennes ou polaires. Elles sont exprimées en unités de longueur, par exemple en mètres, et, dans le cas des coordonnées polaires, en unités angulaires, par exemple en degrés.

Maintenant seront décrites les étapes 110 à 140 du procédé 100.

L'étape 110 comprend l'acquisition d'une image thermique d'une scène comprenant une ou plusieurs personne(s). La scène peut comprendre la totalité de l'espace choisi du bâtiment ou une partie de cet espace.

L'acquisition 110 de l'image thermique est par exemple faite par un imageur thermique 10, visible sur la figure 2. A des fins explicatives, sur cette figure, l'imageur thermique 10 est surdimensionné par rapport à la taille de la scène, référencée S, et de l'espace, référencé E.

Comme visible notamment sur la figure 9, l'imageur thermique 10 est avantageusement disposé en un point élevé au-dessus du sol W de l'espace E, notamment à une hauteur h qui lui permet d'être au-dessus de toute personne P présente dans l'espace E. Par exemple, la hauteur h est supérieure ou égale à 2,2 m. Dans le cas d'un espace intérieur, l'imageur thermique 10 est par exemple installé au plafond. Dans le cas d'un espace extérieur, l'imageur thermique 10 peut être installé contre un mur délimitant l'espace E ou sur un point haut d'un élément haut compris dans l'espace E, par exemple un lampadaire. Aussi, toutes les personnes présentes dans la scène S lors de l'étape 110 apparaissent sur l'image thermique obtenue, indépendamment de leur taille.

Comme il va être détaillé, l'imageur thermique 10 est configuré pour obtenir l'image thermique à partir de l'absorption du rayonnement infrarouge 11 émis par les différents corps présents dans la scène S. Par « corps » on entend tout être vivant ou tout objet présent dans la scène S. Ainsi, le corps peut être une personne, un animal, une plante, un dispositif électronique, un meuble ou un mur compris dans la scène S, entre autres.

L'image thermique obtenue est formée par des pixels repartis sur un plan comprenant une première direction et une deuxième direction perpendiculaires entre elles. Le nombre de pixels de l'image thermique est déterminé par la résolution de l'imageur thermique 10. Par exemple, pour un imageur de résolution 80x80 pixels, l'image thermique obtenue comprend une rangée de 80 pixels selon la première direction, et une colonne de 80 pixels selon la deuxième direction.

L'imageur thermique 10 comprend un dispositif informatique 12, un ensemble de capteurs élémentaires thermiques 14, également appelés capteurs infrarouges, et une lentille 16.

Sur l'exemple de la figure 2, le dispositif informatique 12 est intégré dans l'imageur thermique 10, mais il pourrait être un dispositif externe connecté à l'imageur thermique 10. Le dispositif informatique 12 comprend un processeur 13. Le processeur 13 peut intervenir dans la mise en oeuvre des étapes 110 à 140 du procédé 100 comme il va être détaillé.

Les capteurs infrarouges de l'ensemble 14 sont repartis selon la première direction et selon la deuxième direction. En particulier, le nombre capteurs infrarouges selon chacune des première et deuxième directions est égal au nombre de pixels sur l'image thermique selon chacune de ces directions.

Chaque capteur infrarouge est configuré pour absorber le rayonnement infrarouge 11 émis par les corps présents dans la scène S. Le rayonnement infrarouge 11 absorbé par le capteur 14 provoque la variation d'une grandeur physique au niveau de chaque capteur élémentaire thermique qui est fonction de la quantité de rayonnement infrarouge absorbé. De manière connue, plus la température d'un corps est élevée, plus ce corps émet du rayonnement infrarouge, ce qui augmente la quantité de rayonnement infrarouge 11 absorbé par le capteur 14. Le capteur infrarouge 14 génère ainsi des signaux différents en fonction de la température de chaque corps présent dans la scène S.

En fonction de la manière dont les signaux pour créer l'image thermique sont générés, le capteur infrarouge 14 peut être un bolomètre (ou microbolomètre), un capteur pyroélectrique ou un capteur thermoélectrique, entre autres.

Dans un bolomètre ou un microbolomètre, les signaux pour obtenir l'image thermique sont générés par le capteur 14 à partir d'une variation de sa résistance électrique. En particulier, l'échauffement du capteur 14 provoqué par l'absorption de rayonnement infrarouge fait varier la résistance électrique du capteur 14. La valeur de variation de résistance électrique est associée à une variation de température.

Dans le cas d'un capteur pyroélectrique, l'échauffement du capteur 14 provoqué par l'absorption du rayonnement infrarouge génère une variation de polarisation électrique dans le capteur 14 qui est liée à l'augmentation de température.

Dans le cas d'un capteur thermoélectrique, le rayonnement infrarouge absorbé génère une variation de tension électrique dans le capteur 14 associée à une variation de température.

Les signaux générés par le capteur infrarouge 14 dépendent donc de la température de chaque corps dans la scène S.

Avantageusement, le capteur infrarouge 14 fonctionne à température ambiante. L'imageur thermique 10 est donc un imageur thermique non refroidi.

Comme indiqué précédemment, les signaux générés par le capteur infrarouge 14 sont transmis au dispositif informatique 12. Le processeur 13 traite ces signaux qui correspondent à l'image thermique associée à la scène S.

Comme précisé ci-dessus, l'image thermique comprend une pluralité de pixels. Chaque pixel représente un point de température spécifique d'un corps présent dans la scène S. En fonction de la température du point respectif, chaque pixel de l'image thermique peut être représenté en niveaux de gris. Aussi, comme il ressort clairement de la figure 3, l'image thermique comprend des zones claires 15 et des zones sombres 17.

Les zones claires 15 et les zones sombres 17 aident à identifier les différentes sources de chaleur présentes dans la scène. Sur l'image de la figure 3, les zones claires 15 correspondent à des corps dont la température se situe dans une plage de température donnée, dite plage de températures de référence, tandis que les zones sombres 17 correspondent à des corps dont la température est extérieure à la plage de températures de référence. La plage de températures de référence s'étend par exemple de 20°C à 40°C. Par souci de clarté, dans ce qui suit les zones claires 15 seront aussi appelées « zones chaudes », et les zones sombres 17 seront aussi appelées « zones froides ». On note toutefois que cette correspondance zones chaudes/zones claires et zones froides/zones sombres n'est pas limitative. On note également que la température des zones froides 17 est généralement inférieure à la température des zones chaudes 15, mais le contraire est aussi possible. Autrement dit, la température des zones froides peut être soit en dessous de la borne inférieure de la plage de températures de référence, soit au-dessus de la borne supérieure de la plage de températures de référence.

La lentille 16 est une lentille grand angle. La lentille grand angle 16 a une courte focale, ce qui lui confère un champ de vision large, notamment plus large que le champ de vision de l'œil humain. En particulier, un angle de champ $\gamma$ de la lentille grand angle est de préférence supérieur ou égal à 120°. Comme il ressort de la figure 2, dans le présent texte l'angle de champ $\gamma$ s'entend de l'angle d'ouverture du champ de vision conique 18. Par « angle d'ouverture » on entend l'angle maximal formé par deux lignes génératrices 18A, 18B du cône 18. Autrement dit, l'angle d'ouverture du cône 18 correspond à deux fois l'angle formé entre l'axe de révolution A du cône 18 et l'une de ses lignes génératrices.

Selon un exemple non limitatif, la lentille grand angle 16 est une lentille hypergone, aussi appelée « lentille fisheye ». La lentille hypergone est un type de lentille grand angle présentant un angle de champ $\gamma$ qui peut atteindre 180°.

La lentille grand angle 16 ayant un champ de vision large, il est possible de capturer des scènes S plus grandes qu'avec une lentille dont le champ de vision est similaire à celui de l'œil humain. Toutefois, l'image thermique obtenue à partir de l'imageur thermique 10 muni de la lentille grand angle 16 a une distorsion convexe.

Pour mieux comprendre ce phénomène, on se réfère maintenant aux figures 4A et 4B. La figure 4A, montre une image de référence de type damier acquise au travers d'une lentille hypergone. Comme clairement montré, l'image de référence a une déformation convexe. La figure 4B montre quant à elle la forme de l'image de référence non déformée de type damier. Contrairement à la figure 4A, dans ce cas l'image a une apparence plane.

Un repère orthonormé comprenant un premier axe U1 et un second axe U2 est utilisé pour chacune de ces figures. Le point O correspond à l'origine du repère orthonormé. L'origine O correspond au centre de l'image de la scène obtenue, ainsi qu'au centre de cette scène. Le centre de l'image obtenue correspond au centre optique de la lentille grand angle utilisée.

Le premier axe U1 indique la distance en pixels suivant une direction parallèle à l'axe U1 occupé par un pixel déterminé de l'image par rapport à l'origine O. Le second axe U2 indique la distance en pixels suivant une direction parallèle à l'axe U2 d'un pixel déterminé de l'image par rapport à l'origine O. L'origine O correspondant au centre de l'image de la scène S obtenue, le nombre de pixels disposés de part et d'autre de l'axe U1 est le même. De manière analogue, le nombre de pixels disposés de part et d'autre de l'axe U2 est le même. Ainsi, pour un imageur de résolution 80x80 pixels, 40 pixels sont disposés de chaque côté de l'axe U1, et 40 pixels sont disposés de chaque côté de l'axe U2.

Comme clairement visible sur la figure 4A, plus on s'éloigne du centre O de l'image obtenue par l'imageur, plus l'image est déformée par rapport l'image de la figure 4B.

Comme il va être détaillé ultérieurement, plus on est proche de toute direction formant un angle de 45° avec les axes U1 et U2, plus la déformation est. Ainsi, les zones qui se trouvent sur des directions formant un angle égal à 45°, 135°, 225° ou 315° avec l'axe U1 sont les zones les plus soumises à la déformation liée à l'utilisation de la lentille grand angle.

Maintenant sera décrite l'étape 120 du procédé 100. L'étape 120 comprend l'extraction d'une région d'intérêt correspondant une personne visible dans l'image thermique déformée.

Comme indiqué précédemment, sur l'image thermique déformée obtenue lors de l'étape 110, les zones chaudes 15 correspondent aux corps de l'espace dont la température se trouve dans la plage de températures de référence. Une telle plage de températures correspond à une gamme de températures pouvant être potentiellement la température des personnes présentes dans la scène S en fonction de leur tenue vestimentaire. Toute personne présente dans la scène S apparait donc sur l'image thermique déformée comme une zone chaude 15. Dans la scène S il peut y avoir d'autres corps dont la température est dans la plage de températures de référence, par exemple un animal ou un appareil électronique en service. Par conséquent, de tels corps apparaissent également comme zones chaudes 15 sur l'image thermique déformée obtenue lors de l'étape 110.

Afin de distinguer les zones chaudes 15 correspondant à des personnes des autres zones chaudes 15, le procédé 100 utilise un algorithme de détection de personnes permettant de faire une analyse plus fine de ces zones chaudes 15. L'algorithme est par exemple inclus dans un logiciel exécuté par le dispositif informatique 12 de l'imageur thermique. Ce logiciel peut être mis en oeuvre par le processeur 13.

Par l'application de cet algorithme, le dispositif informatique 12 est capable d'identifier parmi les zones chaudes de l'image thermique déformée, des régions d'intérêt 21. Sur la figure 5, les régions d'intérêt 21 sont les zones chaudes 15 sur lesquelles sont disposés des cercles. Les régions d'intérêt 21 correspondent à des personnes présentes dans la scène S.

Selon un exemple non limitatif l'algorithme de détection de personnes peut être configuré pour détecter certaines caractéristiques propres aux personnes, par exemple à partir de l'analyse de la surface de chaque zone chaude 15 ou de la capacité de chacune de ces zones chaudes 15 à se déplacer dans la scène S.

On note que l'identification des régions d'intérêt 21 sur l'image thermique déformée ne permet pas de déduire directement la position réelle des personnes par rapport au centre de la scène S. En effet, l'image thermique étant déformée, la position d'une région d'intérêt 21 est déviée par rapport à la position de la personne correspondante dans la scène S. Pour corriger cette déviation, le procédé 100 comprend les étapes 130 et 140 qui vont être décrites ci-après.

L'étape 130 du procédé 100 comprend la détermination des coordonnées polaires du centre de chaque région d'intérêt 21 dans un repère polaire dont l'origine se situe au centre O de l'image thermique déformée.

Par « centre de chaque région d'intérêt » on entend le centre de gravité des points formant la région d'intérêt 21. Le centre de chaque région d'intérêt 21 correspond au point central de chaque cercle positionné sur chacune des régions d'intérêt 21 sur la figure 5.

Sur la figure 6, le repère polaire correspond au repère orthonormé comprenant les axes U1 et U2 utilisé précédemment sur les figures 3 à 5. Comme déjà indiqué, le centre O de l'image thermique déformée correspond au centre optique de la lentille grand angle 18.

On considère que le point M est le centre d'une région d'intérêt 21. Le point M a pour coordonnées (x, y) dans le repère orthonormé employé. Ceci veut dire que le point M correspond au point situé à une distance de x pixels par rapport à l'origine O en suivant la direction parallèle à l'axe U1 et situé à une distance de y pixels par rapport à l'origine O en suivant la direction parallèle à l'axe U2.

La détermination des coordonnées polaires du point M comprend d'une part, la détermination de la distance r séparant le point M du centre O de l'image thermique déformée. Cette distance r correspond au module d'un vecteur $\overrightarrow{OM}$ reliant le centre O et le point M. Le centre O de l'image thermique ayant pour coordonnées (0, 0), la distance r est définie comme :

[Math. 1]

$$r = \sqrt{x^2 + y^2}$$

La distance r est un nombre décimal sans unité.

On note ici que l'identification des régions d'intérêt 21 est limitée à la surface comprise dans un cercle 23 (visible sur les figures 3 et 5) dont le diamètre en pixels est égal au nombre total de pixels sur l'une des directions parallèles à l'un des axes U1 ou U2. Comme déjà expliqué, ce nombre total de pixels dépend de la résolution de l'imageur thermique. Dans l'exemple présenté de l'imageur de résolution 80x80 pixels, le diamètre du cercle 23 est donc égal à 80 pixels. Ceci implique que la valeur maximale $r_{max}$ de distance r qui est obtenue lors de la présente étape 130 du procédé 100 est égale à la distance en pixels séparant le dernier pixel situé sur l'axe U1 ou U2 de l'origine O. Autrement dit, la valeur maximale $r_{max}$ de distance r qui peut être obtenue est égale au rayon en pixels du cercle 23. Dans le cas de l'imageur de résolution 80x80 pixels, la valeur maximale $r_{max}$ de distance r est donc égale à 40 . Sur l'exemple de la figure 6, la valeur maximale $r_{max}$ de distance r est donc obtenue pour le point N.

D'autre part, la détermination des coordonnées polaires du point M comprend la détermination de l'angle polaire ou azimut θ. Comme il ressort de la figure 6, l'azimut θ correspond à l'angle formé entre l'axe U1 et le vecteur $\overrightarrow{OM}$. L'azimut θ

est donc défini comme :

[Math. 2]

$$\theta = tan^{-1}\left(\frac{y}{x}\right)$$

Les coordonnées polaires (r, θ) du centre d'une région d'intérêt 21 permettent de localiser ce centre sans ambigüité dans l'image thermique déformée.

Le centre d'une région d'intérêt 21 est considéré ici comme correspondant au « centre de gravité » de la personne identifiée pour la région d'intérêt 21 sur l'mage thermique déformée. Le centre de gravité d'une personne assise ou debout étant typiquement situé à une hauteur comprise entre 0,7 m et 1,3 m par rapport au sol, on considère ici que les coordonnées polaires sont données à une hauteur $h_0$ par rapport au sol qui est par exemple égale à 1 m.

L'étape 140 du procédé 100 comprend l'obtention de la position réelle de la personne par application d'une fonction de correction grand angle à la distance r pour compenser la déformation de l'image thermique. Cette étape 140 est en particulier appliquée à la distance r obtenue pour chaque région d'intérêt identifiée lors de l'étape 120.

La fonction de correction grand angle comprend un premier facteur, dit facteur de normalisation.

Le facteur de normalisation vise à normaliser la coordonnée distance r obtenue pour le centre de chaque région d'intérêt 21 identifiée lors de l'étape 120. Par « normaliser » on entend associer à chaque valeur de la coordonnée distance r, une valeur comprise entre 0 et 1. En particulier, le facteur de normalisation est défini de sorte que sa valeur pour le centre d'une région d'intérêt 21 coïncidant avec le centre O de l'image thermique déformée soit égale à 0, et pour que sa valeur pour le centre d'une région d'intérêt 21 dont la coordonnée r prend sa valeur maximale $r_{max}$ soit égale à 1. Ainsi, pour une région d'intérêt 21 dont le centre ne coïncide pas avec le centre O de l'image thermique mais qui est situé à une distance radiale du centre O inférieure à la valeur maximale $r_{max}$ de la distance r, le facteur de normalisation prend une valeur supérieure à 0 et inférieure à 1. Plus précisément, le facteur de normalisation est défini de sorte que pour toute valeur de distance r comprise entre 0 et $r_{max}$, la valeur du facteur de normalisation suit une loi croissante au fur et à mesure que la distance r s'approche de sa valeur maximale $r_{max}$, comme sur le graphe de la figure 7.

Selon un exemple non limitatif, le facteur de normalisation Fn est défini comme :

[Math. 3]

$$Fn = \frac{r}{\beta\left(1 - \alpha(r^2)\right)}$$

En appliquant cette définition du facteur de normalisation, on obtient une répartition de valeurs du facteur de normalisation en fonction de la distance r similaire à celle du graphe de la figure 7.

Le coefficient α est un coefficient de distorsion qui détermine la courbure de la répartition obtenue dans le graphe de la figure 7. La modification de la valeur du coefficient α permet de modifier cette courbure, ce qui permet d'ajuster la vitesse de croissance du facteur de normalisation entre les valeurs 0 et 1.

Le coefficient β est un coefficient d'échelle qui permet d'assurer, quelle que soit la valeur choisie pour le coefficient de distorsion α, que le facteur de normalisation prend la valeur 1 lorsque la coordonnée r du centre d'une région d'intérêt 21 est égale à la valeur maximale $r_{max}$.

Les valeurs des coefficients α et β sont donc prédéterminées de sorte à garantir que le facteur de normalisation permet effectivement d'associer à chaque valeur de coordonnée distance r une valeur comprise entre 0 et 1. Ces valeurs prédéterminées sont obtenues de manière empirique.

Par exemple, dans un cas où $r_{max}$ est égal à 40, α peut être égal à 0,00032 et β peut être égal à 83.

Comme il va être détaillé, grâce au facteur de normalisation, il est possible d'obtenir la position réelle de chaque personne dans l'espace E de manière simple. Il suffit de connaitre uniquement l'angle de champ γ de la lentille grand angle 16 et la hauteur h d'installation de l'imageur thermique 10. L'angle de champ γ de la lentille grand angle 16 est d'ordinaire indiqué dans sa fiche technique, tandis que la hauteur h d'installation de l'imageur thermique 10 est généralement facilement mesurable

A cet effet, la fonction de correction grand angle comprend un deuxième facteur, dit facteur métrique, qui prend en compte l'angle de champ γ et la hauteur d'installation h.

Plus précisément, le facteur métrique a une valeur qui dépend de l'angle de champ γ de la lentille grand angle 16, de la hauteur h d'installation de l'imageur thermique 10 et de la hauteur $h_0$ admise comme hauteur de référence para rapport au sol W. En particulier, selon un exemple, le facteur métrique Fm est défini comme :

[Math. 4]

$$Fm = (h - h_0)\tan\left(\frac{\gamma}{2}\right)$$

Le facteur métrique est donc un facteur qui est constant dès lors que l'angle de champ $\gamma$, la hauteur h et la hauteur $h_0$ sont déterminées. Autrement dit, ce facteur ne dépend pas des coordonnées du centre des régions d'intérêt 21 identifiées.

Comme il peut être clairement déduit de la figure 9, la valeur du facteur métrique obtenue à partir de [Math. 4] correspond à la distance R séparant le centre C de la scène S d'un point extrême D situé au bord de la scène S. Ce point extrême D se retrouve sur l'image thermique obtenue lors de l'étape 110 au bord de celle-ci avec une coordonnée distance r égale à la valeur maximale $r_{max}$.

Le facteur métrique est exprimé en mètres ou toute autre unité de longueur couramment utilisée.

La fonction de correction grand angle Fc est définie comme le produit du facteur de normalisation Fn et du facteur métrique Fm, c'est-à-dire :

[Math. 5]

$$Fc = Fn \cdot Fm$$

Ainsi, lorsque les facteurs de normalisation et métrique sont définis tel que proposé par [Math. 3] et [Math. 4], la fonction de correction grand angle Fc est :

[Math. 6]

$$Fc = \frac{r}{\beta\left(1 - \alpha(r^2)\right)}(h - h_0)\tan\left(\frac{\gamma}{2}\right)$$

Le facteur de normalisation étant adimensionnel, le résultat de la fonction de correction grand angle est donné en mètres (ou toute autre unité de longueur) grâce au facteur métrique. Le résultat de la fonction de correction grand angle correspond en particulier à la distance séparant la personne associée du centre C de la scène S. Ainsi, le résultat de la fonction de correction grand angle et l'azimut $\theta$ obtenu lors de l'étape 130 donnent la position réelle de la personne dans l'espace E avec un degré de précision satisfaisant.

Une représentation graphique de la fonction Fc est montrée sur la figure 8. Ce graphe représente trois courbes d'évolution de la fonction de correction grand angle Fc en fonction de la distance r, chaque courbe étant associée à une hauteur h d'installation de l'imageur thermique 10 différente. Sur ce graphe, la hauteur h1 est inférieure à la hauteur h2, et la hauteur h2 est inférieure à la hauteur h3. Comme il ressort de cette figure, la hauteur h d'installation de l'imageur thermique 10 influence légèrement l'évolution de la courbe. En particulier, plus la hauteur h d'installation de l'imageur thermique 10 est élevée, plus la distance séparant la personne identifiée du centre C de la scène S augmente avec l'augmentation de la distance r.

Afin d'augmenter davantage la précision de la position réelle de la personne obtenue à partir de la fonction de correction grand angle, un troisième facteur Fa, dit facteur de correction angulaire peut être inclus dans la fonction de correction grand angle Fc. Le facteur de correction angulaire est adimensionnel.

En effet, comme indiqué précédemment, plus une région d'intérêt 21 de l'image thermique déformée est proches d'une direction formant un angle de 45° avec les axes U1 et U2, plus sa déformation est importante. Ainsi, le résultat de la fonction de correction grand angle telle que définie par [Math. 6] s'avère moins précis pour un tel cas de figure.

Le facteur de correction angulaire vient compenser ce manque de précision. En particulier, lorsque la fonction de correction grand angle comprend le facteur de correction angulaire Fa, elle est définie comme :

[Math. 7]

$$Fc = Fn \cdot Fm \cdot Fa$$

La valeur du facteur de correction angulaire est fonction de la valeur de l'azimut θ. Les figures 10A et 10B montrent deux exemples de courbes définissant la valeur du facteur de correction angulaire en fonction de l'azimut θ du centre de la région d'intérêt. Comme visible sur ces figures, la valeur du facteur de correction angulaire est comprise entre 1 et une valeur maximale $Fa_{max}$. Par exemple, la valeur maximale $Fa_{max}$ du facteur de correction angulaire peut être comprise entre 1,10 et 1,30.

Dans le cas de la figure 10A, la valeur du facteur de correction angulaire Fa suit une distribution en forme de dents de scie dont la valeur maximale $Fa_{max}$ est associée aux valeurs 45°, 135°, 225° et 315° de l'azimut θ. Ceci permet de compenser la plus grande déformation propre aux régions d'intérêt situées sur l'une de ces directions. Le facteur de correction angulaire Fa est égal à 1 quand l'azimut est égal à 0°, 90°, 180° ou 270°. Ceci implique que lorsque le centre de la région d'intérêt 21 est situé sur l'un des axes U1, U2 du repère polaire présenté ci-avant, la fonction de correction grand angle comprenant le facteur de correction angulaire donne le même résultat que la fonction de correction grand angle lorsqu'elle ne comprend pas le facteur de correction angulaire. Pour les valeurs d'azimut θ différentes de 0°, 45°, 90°, 135°, 180°, 225°, 270° et 315°, la valeur du facteur de correction angulaire est supérieure à 1 mais inférieure à la valeur maximale $Fa_{max}$.

Dans le cas de la figure 10B, la valeur du facteur de correction angulaire Fa suit une distribution en forme de dents de scie mais entre lesquelles des plateaux sont intercalés. Dans ce cas, la valeur maximale $Fa_{max}$ est toujours associée aux valeurs 45°, 135°, 225° et 315°. Cependant, au contraire de la distribution de la figure 10A, la valeur 1 du facteur de correction angulaire est associée à des plages de valeurs centrées autour des valeurs 0°, 90°, 180° ou 270°. Par exemple, ces plages de valeurs se situent de 0° à 20°, de 70° à 110°, de 160° à 200° et de 250° à 290°.

Le procédé 100 expliqué ci-avant permet donc d'obtenir la position réelle des personnes identifiées dans l'espace E du bâtiment de manière précise. De surcroît, la correction grand angle étant uniquement appliquée à la coordonné de distance r, la mise en oeuvre du procédé ne requiert pas de lourds calculs.

On note que la fonction de correction grand angle et la définition de ses différents facteurs présentés ci-avant ne sont pas limitatives, d'autres fonctions de correction grand angle pouvant être utilisées lors de l'étape 140. Par exemple, la fonction de correction grand angle pourrait être une fonction polynomiale.

Le procédé 100 peut trouver plusieurs applications.

Par exemple, le procédé 100 peut être utilisé pour créer une cartographie de fréquentation de l'espace E, dont un exemple est visible sur la figure 11. La cartographie de fréquentation est obtenue après la répétition du procédé 100 tel que décrit précédemment pendant une période de temps prolongé, par exemple deux semaines. En particulier, pendant cette période de temps, le procédé 100 peut être répété à des intervalles réguliers ou irréguliers. Ainsi, plusieurs images thermiques sont générées pour en obtenir les positions réelles des personnes par l'application de la fonction de correction grand angle. En superposant les positions obtenues pour les personnes après chaque répétition du procédé 100, il est possible de déterminer dans quelles zones de l'espace E les personnes sont habituellement présentes, dans quelles zones de l'espace les personnes sont occasionnellement identifiées et dans quelles zones de l'espace aucune personne n'est jamais identifiée. Des couleurs différentes sont attribuées à chacune de ces zones sur la cartographie de fréquentation. Par exemple, sur la figure 11, les zones claires, référencées 30, correspondent à des zones de circulation, telles un couloir, dans lesquelles les personnes sont identifiées occasionnellement. Les zones sombres, référencés 32, correspondent à des zones où aucune personne n'est identifiée. C'est le cas des zones occupées par des meubles ou les murs. Enfin, les zones 34, dont la couleur est intermédiaire entre les zones claires 30 et les zones sombres 32, correspondent à des zones où des personnes sont identifiées habituellement. Ces zones 34 peuvent correspondre par exemple à des postes de travail.

L'application du procédé 100 décrit ci-avant pour la réalisation de cartographies de fréquentation permet, grâce à l'emploi de la lentille grand angle, d'étudier la présence de personnes dans un espace de grandes dimensions avec un seul imageur thermique. Par ailleurs, grâce à l'application de la fonction de correction grand angle, la position des personnes identifiées dans l'espace est obtenue avec un niveau de précision élevé, de sorte que les différentes zones de la cartographie de fréquentation réalisée sont délimitées de manière précise.

Le procédé 100 peut également être utilisé dans le comptage de personnes. En particulier, l'identification des régions d'intérêt permet de compter facilement le nombre de personnes dans l'espace E. De surcroît, la position de ces personnes dans l'espace E étant déterminée de manière précise, le procédé 100 présente un intérêt majeur pour le comptage de personnes lorsque plusieurs imageurs thermiques sont repartis à travers une salle de grande étendue. Dans un tel cas de figure, le manque de précision des procédés d'obtention de la position d'une personne de la technique antérieure conduit à des erreurs de comptage de personnes dans la salle. Ces erreurs comprennent notamment le comptage multiple d'une même personne qui est située à une position qui est couverte par l'angle de champ de plusieurs imageurs thermiques. En effet, la position des personnes obtenue par ces procédés de la technique antérieure étant déviée par rapport à la véritable position de la personne, chacun des imageurs peut identifier la même personne sur des positions différentes. La même personne risque donc d'être comptée plusieurs fois.

Comme visible sur la figure 12, afin de faciliter le comptage de personnes, un filtre 40 peut être appliqué pour délimiter l'identification et le comptage de personnes à une surface de l'espace E de taille inférieure à la surface de cet espace E que l'angle de champ de l'imageur thermique permet de couvrir. En particulier, l'identification et/ou le comptage de personnes est limité(e) à la surface comprise dans le filtre 40. Sur la figure 12, le filtre 40 a une forme carrée sans que ceci ne soit limitatif. Le filtre 40 pourrait aussi avoir, par exemple, une forme de rectangle, de cercle, ou toute autre forme définie par un ensemble de points qui définissent un périmètre fermé.

Le filtre 40 peut simplifier le procédé 100 décrit ci-avant lorsqu'on sait qu'un corps chaud qui n'est pas une personne, par exemple un radiateur, est présent dans la scène couverte par l'imageur thermique. En particulier, le filtre peut être configuré de sorte à exclure l'identification et/ou le comptage de personnes dans la partie de la scène occupée par un tel corps chaud.

De manière avantageuse, lorsque plusieurs imageurs thermiques sont agencés dans une salle, les filtres 40 appliqués par les imageurs sont limitrophes entre eux, ce qui permet de garantir l'identification et/ ou le comptage des personnes sur toute la surface couverte par les angles de champ des imageurs thermiques, tout en évitant l'identification et/ou le comptage simultanée d'une même personne par plusieurs imageurs.

La présente divulgation concerne également l'imageur thermique 10 décrit ci-avant.

Enfin, la présente divulgation concerne un détecteur domotique 50, visible sur la figure 9. Le détecteur domotique 50 comprend l'imageur thermique 10. L'imageur thermique 10 est intégré dans le détecteur domotique 50. Le détecteur domotique 50 est configuré pour mettre en oeuvre le procédé 100 d'obtention de la position d'une personne dans l'espace E tel que décrit ci-avant. On note que le détecteur domotique 50 peut comprendre en outre d'autres dispositifs lui conférant d'autres fonctionnalités. Par exemple, le détecteur domotique 50 peut comprendre un capteur de luminosité, un capteur de son, un capteur de mouvement, un capteur de température, un capteur de fumées, un capteur de pollution de l'air ambient, etc.

## Revendications

1. Procédé (100) d'obtention de la position d'une personne dans un espace (E) d'un bâtiment par un imageur thermique (10) situé en hauteur dans le dit espace (E) et comprenant une lentille grand angle (16), le procédé comprenant les étapes de :

   a) acquisition (110) par l'imageur thermique (10), à travers sa lentille grand angle (16), d'une image thermique déformée d'une scène (S) dans l'espace (E) comprenant la personne, l'image thermique étant déformée optiquement par la lentille grand angle (16), et l'image thermique déformée comprenant une zone chaude (15) ;
   b) extraction (120) d'une région d'intérêt (21) correspondant à la personne de l'image thermique déformée à l'aide d'un algorithme de détection de zones chaudes (15) ;
   c) détermination (130) de la position de la région d'intérêt (21) dans l'image thermique déformée en identifiant les coordonnées polaires distance r et angle $\theta$ du centre de la région d'intérêt (21) dans un repère polaire dont l'origine se situe au centre (O) de l'image thermique déformée ;
   d) obtention (140) de la position réelle de la personne dans l'espace (E) par application d'une fonction de correction grand angle à la distance r pour compenser la déformation de l'image thermique due à la lentille grand angle (16).

2. Procédé (100) selon la revendication 1, dans lequel la fonction de correction grand angle appliquée à l'étape d) comprend un facteur de normalisation Fn de la coordonnée distance r du centre de la région d'intérêt (21) et un facteur métrique Fm tenant compte d'un angle de champ de la lentille grand angle (16) et d'une hauteur d'installation de l'imageur thermique (10) dans l'espace (E) du bâtiment par rapport à un sol (W) dudit espace (E), la fonction de correction grand angle comprenant notamment le produit du facteur de normalisation Fn et du facteur métrique Fm.

3. Procédé (100) selon la revendication précédente, dans lequel le facteur de normalisation est défini comme :

$$Fn = \frac{r}{\beta(1 - \alpha(r^2))}$$

où $\beta$ est un coefficient d'échelle et $\alpha$ est un coefficient de distorsion, le coefficient d'échelle $\beta$ et le coefficient de distorsion $\alpha$ ayant des valeurs prédéterminées.

**4.** Procédé (100) selon la revendication 2 ou la revendication 3, dans lequel le facteur métrique est défini comme :

$$Fm = (h - h_0)\tan\left(\frac{\gamma}{2}\right)$$

où h est la hauteur de l'imageur thermique (10) par rapport au sol (W) de l'espace, $h_0$ est une valeur représentative de la hauteur du centre de la région d'intérêt (21) par rapport au sol (W) et $\gamma$ est l'angle de champ de la lentille grand angle.

**5.** Procédé (100) selon l'une des revendications 2 à 4, dans lequel la fonction de correction grand angle appliquée à l'étape d) comprend en outre un facteur de correction angulaire Fa, dans lequel une valeur du facteur de correction angulaire Fa est fonction d'une valeur de la coordonnée angle $\theta$, la valeur du facteur de correction angulaire Fa suivant une distribution en forme de dents de scie dont une valeur maximale est associée aux valeurs 45°, 135°, 225° et 315° de la coordonnée angle $\theta$.

**6.** Procédé (100) selon la revendication 5, dans lequel la fonction de correction grand angle comprend le produit du facteur de normalisation Fn fois le facteur métrique Fm fois le facteur de correction angulaire Fa.

**7.** Imageur thermique (10) comprenant une lentille grand angle (16), l'imageur thermique (10) étant configuré pour mettre en oeuvre le procédé (100) selon l'une quelconque des revendications 1 à 6.

**8.** Imageur thermique (10) selon la revendication 7, dans lequel la lentille (16) est une lentille hypergone.

**9.** Imageur thermique (10) selon la revendication 7 ou 8, comprenant un capteur imagerie infrarouge à ondes longues (14) pour l'acquisition des images thermiques.

**10.** Détecteur domotique (50) comprenant un imageur thermique (10) selon l'une des revendications 7 à 9.

**Patentansprüche**

**1.** Verfahren (100) zur Bestimmung der Position einer Person in einem Raum (E) eines Gebäudes durch ein Wärmebildgerät (10), das sich in einer erhöhten Position in dem Raum (E) befindet und ein Weitwinkelobjektiv (16) umfasst, das Verfahren umfassend die folgenden Schritte:

a) Aufnahme (110) eines verzerrten Wärmebildes einer Szene (S), die die Person umfasst, in dem Raum (E) durch das Wärmebildgerät (10) durch sein Weitwinkelobjektiv (16), wobei das Wärmebild durch das Weitwinkelobjektiv (16) optisch verzerrt ist und das verzerrte Wärmebild eine heiße Zone (15) umfasst;
b) Extrahieren (120) eines Bereichs von Interesse (21), der der Person auf dem verzerrten Wärmebild entspricht, mit Hilfe eines Algorithmus zur Detektion heißer Zonen (15);
c) Festlegung (130) der Position des Bereichs von Interesse (21) in dem verzerrten Wärmebild durch Identifizierung der polaren Koordinaten Abstand r und Winkel $\theta$ des Zentrums des Bereichs von Interesse (21) in einem polaren Koordinatensystem, dessen Ursprung in dem Zentrum (O) des verzerrten Wärmebilds liegt;
d) Bestimmung (140) der tatsächlichen Position der Person in dem Raum (E) durch Anwendung einer Weitwinkelkorrekturfunktion auf den Abstand r, um die durch das Weitwinkelobjektiv (16) verursachte Verzerrung des Wärmebilds zu kompensieren.

**2.** Verfahren (100) nach Anspruch 1, wobei die in Schritt d) angewandte Weitwinkelkorrekturfunktion einen Normierungsfaktor Fn der Entfernungskoordinate r des Zentrums des Bereichs von Interesse (21) und einen metrischen Faktor Fm umfasst, der einen Bildwinkel des Weitwinkelobjektivs (16) und eine Installationshöhe des Wärmebildgeräts (10) in dem Raum (E) des Gebäudes in Bezug auf einen Boden (W) des Raums (E) berücksichtigt, wobei die Weitwinkelkorrekturfunktion insbesondere das Produkt aus dem Normierungsfaktor Fn und dem metrischen Faktor Fm umfasst.

**3.** Verfahren (100) nach dem vorhergehenden Anspruch, wobei der Normierungsfaktor definiert ist als:

$$Fn = \frac{r}{\beta(1 - \alpha(r^2))}$$

wobei β ein Skalierungskoeffizient und a ein Verzerrungskoeffizient ist, wobei der Skalierungskoeffizient β und der Verzerrungskoeffizient $\alpha$ im Voraus festgelegte Werte aufweisen.

**4.** Verfahren (100) nach Anspruch 2 oder Anspruch 3, wobei der metrische Faktor definiert ist als:

$$Fm = (h - h_0)\tan(\frac{\gamma}{2})$$

wobei h die Höhe des Wärmebildgeräts (10) über dem Boden (W) des Raums ist, $h_0$ ein Wert ist, der die Höhe des Zentrums des Bereichs von Interesse (21) über dem Boden (W) repräsentiert, und $\gamma$ der Bildwinkel des Weit-winkelobjektivs ist.

**5.** Verfahren (100) nach einem der Ansprüche 2 bis 4, wobei die in Schritt d) angewandte Weitwinkelkorrekturfunktion einen Winkelkorrekturfaktor Fa umfasst, wobei ein Wert des Winkelkorrekturfaktors Fa von einem Wert der Winkelkoordinate θ abhängt, wobei der Wert des Winkelkorrekturfaktors Fa einer sägezahnförmigen Verteilung folgt, deren Maximalwert den Werten 45°, 135°, 225° und 315° der Winkelkoordinate θ zugeordnet ist.

**6.** Verfahren (100) nach Anspruch 5, wobei die Weitwinkelkorrekturfunktion das Produkt aus dem Normierungsfaktor Fn mal dem metrischen Faktor Fm mal dem Winkelkorrekturfaktor Fa umfasst.

**7.** Wärmebildgerät (10), umfassend ein Weitwinkelobjektiv (16), wobei das Wärmebildgerät (10) so konfiguriert ist, dass es das Verfahren (100) nach einem der Ansprüche 1 bis 6 ausführt.

**8.** Wärmebildgerät (10) nach Anspruch 7, wobei das Objektiv (16) ein hypergonales Objektiv ist.

**9.** Wärmebildgerät (10) nach Anspruch 7 oder 8, umfassend einen Langwellen-Infrarot-Bildsensor (14) zur Aufnahme von Wärmebildern.

**10.** Hausautomationsdetektor (50), umfassend ein Wärmebildgerät (10) nach einem der Ansprüche 7 bis 9.


**Claims**

**1.** Method (100) for obtaining the position of a person in a space (E) of a building via a thermal imager (10) located at height in said space (E) and comprising a wide-angle lens (16), the method comprising steps of:

 a) acquiring (110), with the thermal imager (10), through its wide-angle lens (16), a deformed thermal image of a scene (S) in the space (E) comprising the person, the thermal image being optically deformed by the wide-angle lens (16), and the deformed thermal image comprising a hot zone (15);
 b) extracting (120) a region of interest (21) corresponding to the person from the deformed thermal image using an algorithm for detecting hot zones (15);
 c) determining (130) the position of the region of interest (21) in the deformed thermal image by identifying the polar coordinates distance r and angle θ of the centre of the region of interest (21) in a polar coordinate system the origin of which is located at the centre (O) of the deformed thermal image;
 d) obtaining (140) the actual position of the person in the space (E) by applying a wide-angle correction function to the distance r so as to compensate for the deformation of the thermal image due to the wide-angle lens (16).

**2.** Method (100) according to Claim 1, wherein the wide-angle correction function applied in step d) comprises a normalization factor Fn for normalizing the distance coordinate r of the centre of the region of interest (21) and a metric factor Fm accounting for a field angle of the wide-angle lens (16) and for a height of installation of the thermal imager (10) in the space (E) of the building with respect to a floor (W) of said space (E), the wide-angle correction function especially comprising the product of the normalization factor Fn and of the metric factor Fm.

**3.** Method (100) according to the preceding claim, wherein the normalization factor is defined as:

$$Fn = \frac{r}{\beta(1 - \alpha(r^2))}$$

where $\beta$ is a scale coefficient and $\alpha$ is a distortion coefficient, the scale coefficient $\beta$ and the distortion coefficient $\alpha$ having predetermined values.

4. Method (100) according to Claim 2 or Claim 3, wherein the metric factor is defined as:

$$Fm = (h - h_0)\tan\left(\frac{\gamma}{2}\right)$$

where h is the height of the thermal imager (10) with respect to the floor (W) of the space, $h_0$ is a value representative of the height of the centre of the region of interest (21) with respect to the floor (W) and $\gamma$ is the field angle of the wide-angle lens.

5. Method (100) according to one of Claims 2 to 4, wherein the wide-angle correction function applied in step d) further comprises an angular correction factor Fa, and wherein a value of the angular correction factor Fa is dependent on a value of the angle coordinate $\theta$, the value of the angular correction factor Fa following a sawtooth-shaped distribution a maximum value of which is associated with the values 45°, 135°, 225° and 315° of the angle coordinate $\theta$.

6. Method (100) according to Claim 5, wherein the wide-angle correction function comprises the product of the normalization factor Fn times the metric factor Fm times the angular correction factor Fa.

7. Thermal imager (10) comprising a wide-angle lens (16), the thermal imager (10) being configured to implement the method (100) according to any one of Claims 1 to 6.

8. Thermal imager (10) according to Claim 7, wherein the lens (16) is a fisheye lens.

9. Thermal imager (10) according to Claim 7 or 8, comprising a long-wave-infrared imaging sensor (14) for acquiring the thermal images.

10. Home automation sensor (50) comprising a thermal imager (10) according to one of Claims 7 to 9.

[Fig. 1]

100

-110-

-120-

-130-

-140-

FIG. 1

[Fig. 2]

# FIG. 2

[Fig. 3]

FIG. 3

[Fig. 4A]

FIG. 4A

[Fig. 4B]

FIG. 4B

[Fig. 5]

FIG. 5

[Fig. 6]

FIG. 6

[Fig. 7]

FIG. 7

[Fig. 8]

FIG. 8

[Fig. 9]

## FIG. 9

[Fig. 10A]

FIG. 10A

[Fig. 10B]

FIG. 10B

[Fig. 11]

FIG. 11

[Fig. 12]

FIG. 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- People Tracking in Ambient Assisted Living Environments Using Low-Cost Thermal Image Cameras. **MANDEL C. et al.** Inclusive Smart Cities and Digital Health. ICOST 2016. Lecture Notes in Computer Science. Springer, vol. 9677

- **SWAMIDOSS I. N. et al.** Systematic approach for thermal imaging camera calibration for machine vision applications. *Optik*, 29 September 2021, vol. 247, ISSN 0030-4026